# FASCICULE DE BREVET EUROPEEN

(11) **EP 2 858 853 B1**
(45) Date de publication et mention de la délivrance du brevet: **22.05.2019**
(21) Numéro de dépôt: 13727903.0
(22) Date de dépôt: 11.06.2013
(51) Int. Cl.: B60P 1/02, B60P 1/08, B62D 63/06, B60P 1/18

(54) **REMORQUE BASCULANTE COMPRENANT UN TIMON ARTICULÉ COULISSANT**
KIPPBARER ANHÄNGER MIT EINER VERSCHIEBBAREN UND KNICKBAREN DEICHSEL
TILTING TRAILER COMPRISING A SLIDING ARTICULATED DRAWBAR

(30) Priorité: 11.06.2012 FR 1255448
(43) Date de publication de la demande: 15.04.2015
(73) Titulaire: Cochet, 72130 Sougé-le-Ganelon (FR)
(72) Inventeur: TORTELLIER, Christian, F-35530 Servon Sur Vilaine (FR)
(74) Mandataire: Vidon Brevets & Stratégie
(86) Numéro de dépôt international: PCT/EP2013/061953
(87) Numéro de publication internationale: WO 2013/186186

(56) Documents cités:
- DD-A5- 202 122
- DE-A1- 2 651 936
- DE-U1-202005 000 051

## Description

### 1. DOMAINE DE L'INVENTION

Le domaine de l'invention est celui des remorques basculantes.

Plus précisément, l'invention concerne une remorque basculante permettant à un utilisateur de charger et de décharger seul des objets encombrants et lourds tels que des motocyclettes, des équipements électroménagers, des engins de jardin (par exemple une tondeuse autoportée, un mini-tracteur), etc...

### 2. ARRIÈRE-PLAN TECHNOLOGIQUE

On connaît, dans l'état de la technique, différents types de remorques basculantes permettant à une personne seule de procéder au chargement et déchargement d'objets encombrants et lourds, via l'usage d'un diable.

Par exemple, dans le document US 5,975,828 il est proposé une telle remorque comprenant un timon monté de manière solidaire au châssis de la remorque, ainsi qu'un système de basculement du châssis. Un tel système de basculement comprend un seul câble attaché au centre d'un essieu, commandant le basculement ou le levage du châssis en fonction de la tension exercée sur le câble.

Un inconvénient de la solution connue est qu'un tel système de basculement peut être détérioré ou usé par des éléments extérieurs (graviers, chocs), de par le positionnement et la nature du câble qui est monté sous le châssis de la remorque.

Un autre inconvénient de la solution connue est que le câble étant monté au centre de l'essieu, celui-ci a tendance à se déformer lorsque le câble se tend et qu'une forte charge est positionnée sur la remorque.

Encore un autre inconvénient de la solution connue est que la gestion de la tension du câble doit être réalisée par un dispositif électronique, plus perfectible qu'un dispositif mécanique, et nécessitant une alimentation électrique.

Encore un autre inconvénient de la solution connue est que la tension du câble doit être souvent vérifiée afin de prévenir un basculement intempestif du châssis notamment lors d'une conduite.

Encore un autre inconvénient de la solution connue est que l'on doit utiliser des moyens de freinage pour ralentir la vitesse à laquelle se réalise l'abaissement du châssis.

D'autres techniques présentées dans les documents US2006/0045693**,** US2012/0020762**,** US 2005/0067799**,** IE 2006/0467 ont été développées, cependant ces techniques présentent elles-aussi des inconvénients analogues à ceux exposé précédemment. De plus, ces techniques sont relativement complexes à mettre en oeuvre et nécessitent de nombreuses modifications à apporter à une remorque classique.

Le document DD 202 122 A5 est considéré comme l'état de la technique le plus proche de l'objet de la revendication indépendante 1.

### 3. OBJECTIFS DE L'INVENTION

L'invention, dans au moins un mode de réalisation, a notamment pour objectif de pallier ces différents inconvénients de l'état de la technique.

Plus précisément, dans au moins un mode de réalisation de l'invention, un objectif est de fournir une remorque qui soit conforme aux normes de sécurité routière européenne.

Un autre objectif d'au moins un mode de réalisation de l'invention est de fournir une telle remorque dont le coût de fabrication soit relativement peu élevé.

Un autre objectif d'au moins un mode de réalisation de l'invention est de fournir une telle remorque qui puisse être obtenue en réalisant peu de modifications sur une remorque vendue dans le commerce.

Au moins un mode de réalisation de l'invention a également pour objectif de fournir une telle remorque permettant d'abaisser un châssis d'une faible pente, de l'ordre de 3 à 5 degrés par rapport au sol.

Un autre objectif d'au moins un mode de réalisation de l'invention est de fournir une telle remorque qui puisse basculer ou se lever rapidement.

Un objectif complémentaire d'au moins un mode de réalisation de l'invention est de fournir une telle remorque permettant d'effectuer un basculement qui ne soit pas brusque, et ce en sans utiliser des moyens de freinages spécifiques supplémentaires.

### 4. EXPOSÉ DE L'INVENTION

Dans un mode de réalisation particulier de l'invention, il est proposé une remorque basculante comprenant un châssis monté sur un essieu pivotant par rapport à des roues de ladite remorque, et :
- un timon articulé monté sur ledit essieu, ledit timon articulé étant monté libre et coulissant par rapport audit châssis, et
- des moyens d'actionnement du coulissement dudit timon articulé.

Une telle remorque est remarquable en ce que ledit un timon articulé possède une forme en V, une première extrémité étant fixé à une flèche d'attelage, une deuxième extrémité étant fixée audit essieu à proximité d'une première roue, et une troisième extrémité étant fixée audit essieu à proximité d'une deuxième roue.

Ainsi, ce mode de réalisation particulier de l'invention repose sur une approche tout à fait nouvelle et inventive de consistant à utiliser un timon articulé contribuant au pivotement d'un essieu par rapport aux roues, lorsque celui-ci coulisse par rapport au châssis, ledit coulissement étant activé par lesdits moyens d'actionnement.

En outre, un timon articulé possédant une telle forme possède une résistance accrue à la déformation par rapport à d'autres formes, vis-à-vis du poids des charges présentes sur la remorque.

Ainsi, les caractéristiques techniques de la présente remorque permettent d'atteindre tous les objectifs susmentionnés.

Il convient de noter que, selon la présente invention, le timon articulé n'est pas monté fixe sur le châssis. En effet, il est monté libre (ou indépendant) par rapport à celui-ci, contrairement aux solutions proposées dans l'état de la technique.

Selon une caractéristique particulière, une telle remorque est remarquable en ce qu'elle comprend une plaque minéralogique fixée audit châssis, et des moyens d'escamotage de ladite plaque minéralogique permettant d'escamoter ladite plaque lors du basculement dudit châssis.

Ainsi, l'utilisation des moyens d'escamotage permet d'éviter que la plaque minéralogique ne constitue un obstacle à l'abaissement du châssis, et donc au chargement/déchargement d'objets. En effet, sans ces moyens d'escamotage, un jeu peut subsister entre le châssis et le sol, qui oblige l'utilisateur à soulever les objets à charger/décharger.

Selon une caractéristique particulière, une telle remorque est remarquable en ce que lesdits moyens d'escamotage sont activés automatiquement lors de l'activation des moyens d'actionnement.

Selon une caractéristique particulière, une telle remorque est remarquable en ce que lesdits moyens de verrouillage comprennent une goupille ou un rivet.

Selon une caractéristique particulière, une telle remorque est remarquable en ce que lesdits moyens de guidage comprennent des rails, ou des éléments roulants.

Selon une caractéristique particulière, une telle remorque est remarquable en ce que lesdits moyens d'actionnement comprennent un levier de commande et un vérin appartenant à la liste comprenant :
- un vérin hydraulique ;
- un vérin pneumatique ;
- un vérin électrique ;
- un vérin mécanique.

Ainsi, l'utilisation d'un vérin permet de maîtriser la vitesse de descente du châssis, au sens où l'abaissement du châssis n'est pas réalisé de manière rapide. Ainsi, les objets déjà chargés ne sont pas altérés (en effet, un abaissement rapide est nécessairement brutale, induisant potentiellement des chocs pouvant altérer des objets déjà chargés sur la remorque, ce que la présente invention permet d'éviter).

Selon une caractéristique particulière, une telle remorque est remarquable en ce que lesdits moyens d'actionnement sont montés à proximité d'une flèche d'attelage montée sur ledit timon articulé.

Ainsi, un utilisateur peut accéder facilement aux moyens d'actionnement, sans avoir à se positionner sous la remorque.

Selon une caractéristique particulière, lesdits moyens d'actionnement sont solidaires dudit châssis et dudit timon articulé.

Selon une caractéristique particulière, une telle remorque comprend des moyens de guidage dudit timon articulé permettant de guider un mouvement dudit timon articulé lors d'un coulissement dudit timon articulé par rapport audit châssis.

Selon une caractéristique particulière, une telle remorque comprend des moyens de verrouillage d'une position dudit timon articulé.

Selon une caractéristique particulière, une telle remorque est remarquable en ce que ledit levier de commande et ledit vérin sont solidaires.

Selon une caractéristique particulière, une telle remorque est remarquable en ce qu'une première partie desdits moyens d'actionnement est montée sur ledit timon articulé, et qu'une deuxième partie desdits moyens d'actionnement est montée sur ledit essieu.

Selon une caractéristique particulière, une telle remorque est remarquable en ce que ladite première partie desdits moyens d'actionnement comprend une pompe, et en ce que ladite deuxième partie desdits moyens d'actionnement comprend un vérin relié à ladite pompe.

Selon une caractéristique particulière, une telle remorque comprend des moyens de suspension situés à l'intérieur dudit essieu.

### 5. LISTE DES FIGURES

D'autres caractéristiques et avantages de l'invention apparaîtront à la lecture de la description suivante, donnée à titre d'exemple indicatif et non limitatif, et des dessins annexés, dans lesquels :
- les figures 1(a) et 1(b) présentent des vues de % d'une remorque selon un premier mode de réalisation de l'invention respectivement en position route (encore appelée position haute) et en position dite de chargement (encore appelée position basse) ;
- les figures 2(a) et 2(b) présentent des vues de côté à proximité d'une roue, et selon une coupe par un plan comprenant la droite (D) apparaissant sur la figure 1, respectivement en position haute et en position basse du premier mode de réalisation de l'invention ;
- les figures 3(a) et 3(b) présentent des vues de côté et selon une coupe par un plan comprenant la droite (D) apparaissant sur la figure 1, respectivement en position haute et en position basse du premier mode de réalisation de l'invention ;
- les figures 4(a) et 4(b) présentent des vues de côté des moyens d'escamotage respectivement en position haute et en position basse selon le premier mode de réalisation de l'invention ;
- les figures 5(a) et 5(b) présentent des vues arrière d'une remorque respectivement en position haute et en position basse selon le premier mode de réalisation de l'invention ;
- les figures 6(a) et 6(b) présentent des vues en perspective d'une partie supérieure d'une remorque selon le premier mode de réalisation de l'invention respectivement en position route et en position dite de chargement ;
- les figures 7(a) et 7(b) présentent des vues de % d'une remorque selon un deuxième mode de réalisation de l'invention respectivement en position route et en position dite de chargement ; et
- la figure 7(c) présente une vue agrandie de l'extrémité de la remorque, à proximité de la flèche d'attelage.

### 6. DESCRIPTION DÉTAILLÉE

Sur toutes les figures du présent document, les éléments et étapes identiques sont désignés par une même référence numérique.

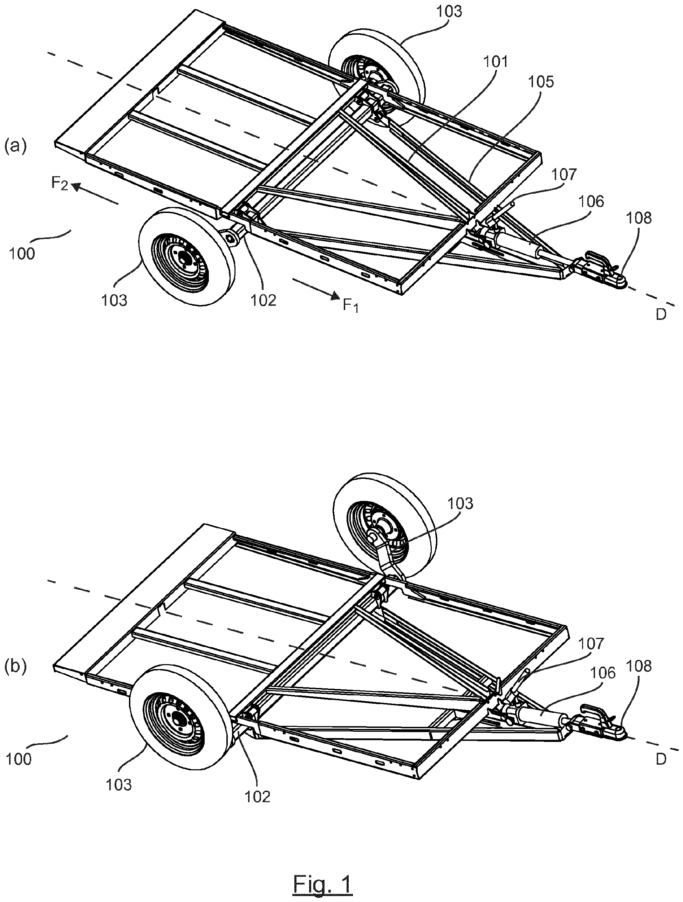

Les figures 1(a) et 1(b) présentent des vues de % d'une remorque selon un premier mode de réalisation de l'invention respectivement en position route (encore appelée position haute) et en position dite de chargement (encore appelée position basse).

Plus précisément, une remorque 100 selon un premier mode de réalisation de l'invention comprend un essieu 102 qui est un arbre comprenant deux extrémités sur lesquelles sont montées des roues 103 via deux bras mécaniques 104. Chacun des bras mécanique 104 peut effectuer une rotation par rapport au centre d'une roue 103 selon un sens horaire ou son opposé. De plus, un châssis 101 est monté de manière solidaire de l'essieu, et un timon articulé 105, en forme de V, est monté sur l'essieu en deux points d'encrage.

Un telle remorque 100 comprend en outre à l'extrémité de la tête avant du timon articulé 105 une flèche d'attelage 108 permettant de réaliser la fixation à un véhicule tractant.

A proximité de la flèche d'attelage 108 sont disposés des moyens d'actionnement comprenant un vérin 106 et un levier de commande 107 dudit vérin 106. Le vérin 106 est monté sur le châssis 101 à une première extrémité et sur le timon 105 à l'autre extrémité.

Dans ce mode de réalisation, le timon articulé 105 peut être manipulé de sorte qu'il coulisse par rapport au châssis, le coulissement étant réalisé et contrôlé via des moyens de guidage non représentés en figure 1.

Lorsque la remorque est en position haute, le châssis 101, ainsi que le timon articulés 105 sont sensiblement parallèle au sol.

Lorsqu'un utilisateur souhaite charger des objets sur un plateau (non représenté) monté sur le châssis de la remorque, il actionne les moyens d'actionnement de sorte que le vérin 106 se comprime. La compression du vérin 106 entraîne un coulissement du timon articulé 105 (par rapport au châssis 101) dans le sens de la flèche *F₁*, qui lui-même, étant fixé sur l'essieu entraîne une pivotement selon un arc de cercle des bras 104, et de facto abaisse l'essieu et donc le châssis monté sur ledit essieu. Ainsi, l'utilisateur peut charger aisément des objets encombrants car la pente d'inclinaison du châssis par rapport au sol est faible (de l'ordre de quelques degrés).

Une fois les objets chargés, l'utilisateur peut actionner le levier de commande 107 afin que le vérin 106 s'allonge (il est alors en position dite tractée).

Le vérin 106 exerce alors une force selon la flèche *F₂* qui entraîne le timon articulé 105, dans cette direction. Ainsi, les bras mécaniques 104 pivotent alors dans le sens opposé à celui correspondant au basculement du châssis. Un tel pivotement à pour effet de redresser l'essieu, et donc le châssis monté sur celui-ci, jusqu'à ce que le châssis ainsi que le timon articulé soit à nouveau sensiblement parallèle au sol.

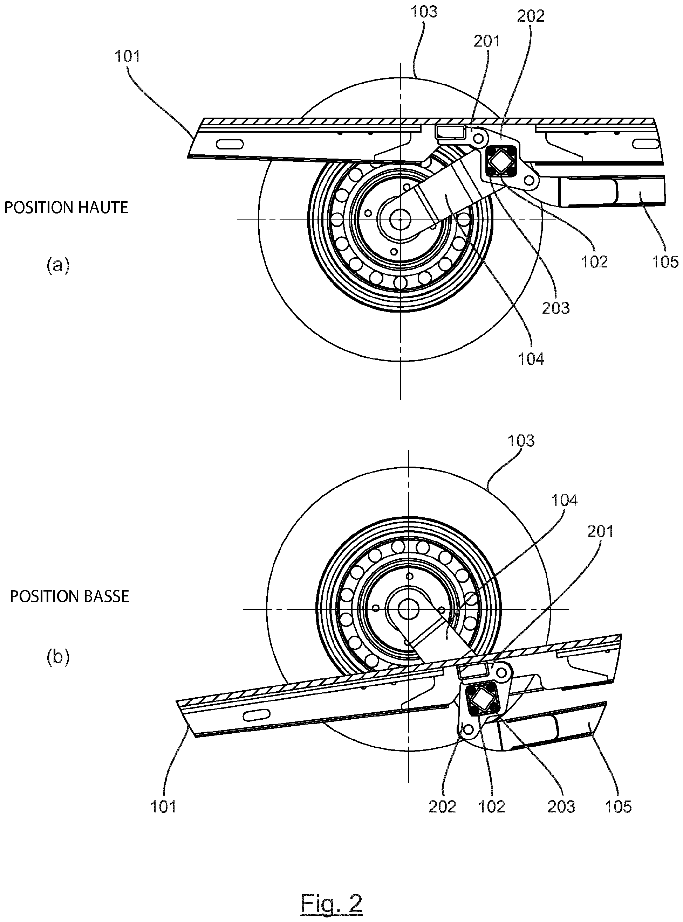

Les figures 2(a) et 2(b) présentent des vues de côté à proximité d'une roue, et selon une coupe par un plan comprenant la droite (D) apparaissant sur la figure 1, respectivement en position haute et en position basse du premier mode de réalisation de l'invention.

Plus précisément, ces figures permettent de détailler l'agencement des différents composants à proximité d'une roue 103.

En effet, un bras mécanique 104 fixé à une roue 103 est monté sur l'essieu 102 via une pièce d'articulation 202 sur laquelle est fixé directement le timon articulé 105, ainsi que le châssis 101 de la remorque 100 via une autre pièce d'articulation 201.

Il convient de noter le coulissement du timon articulé 105, qui est articulé grâce à la pièce d'articulation 202, entraîne un mouvement de la pièce d'articulation 202 ainsi que de chaque bras mécaniques 104, permettant l'obtention d'une position haute ou d'une position basse en fonction de l'orientation du coulissement du timon articulé 105.

Il convient de noter que la conception de basculement de l'essieu permet de conserver la suspension classique utilisée sur la plupart des remorques bagagères, c'est-à-dire les quatre profils caoutchouc 203 intégrés entre les deux tubes carrés de l'essieu 102. Dans un autre mode de réalisation, non représenté, trois profils caoutchouc sont intégrés entre les deux tubes carrés de l'essieu.

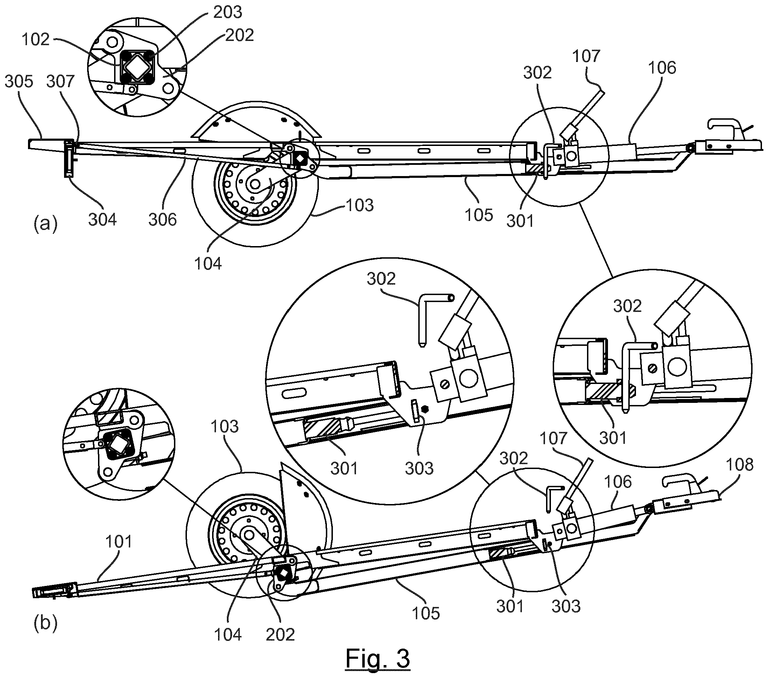

Les figures 3(a) et 3(b) présentent des vues de côté et selon une coupe par un plan comprenant la droite (D) apparaissant sur la figure 1, respectivement en position haute et en position basse du premier mode de réalisation de l'invention.

Plus précisément, selon cette vue, on distingue des moyens de verrouillage du timon articulé 105 comprenant une goupille 302, une lumière 303 présente dans le châssis à proximité des moyens d'actionnement, ainsi que des moyens de guidage 301 du timon articulé 105. Lesdits moyens de verrouillage permettent de verrouiller le timon articulé 105 dans une position donnée (notamment en position haute). De plus, une telle remorque comprend en outre une plaque minéralogique 304 fixée sur le châssis, et positionnée à l'extrémité arrière de la remorque. La plaque minéralogique 304 est reliée en outre par deux éléments articulés 307, chaque élément articulé 307 étant relié à une bielle 306 montée sur une pièce d'articulation 202.

Ainsi, lorsque la remorque bascule d'une position haute à une position basse, le mouvement des pièces d'articulation 202 induit, via le mouvement des bielles 306, et l'articulation des éléments articulés 307 un soulèvement de la plaque minéralogique qui vient se positionnée dans un évidemment d'une pièce 305 qui est positionnée à l'extrémité arrière du châssis 101. Ainsi, on escamote aisément la plaque minéralogique via l'utilisation des moyens d'escamotage comprenant les bielles 306, les pièces d'articulation 202, les éléments articulés 307 et la pièce creuse 305, lors de l'abaissement du châssis 101.

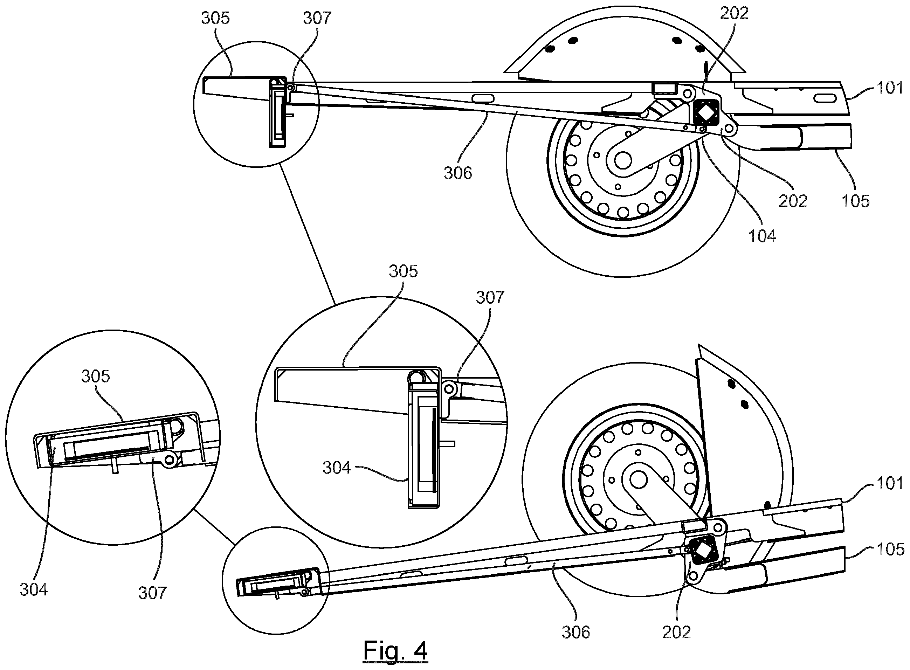

Les figures 4(a) et 4(b) présentent des vues de côté des moyens d'escamotage respectivement en position haute et en position basse selon le premier mode de réalisation de l'invention.

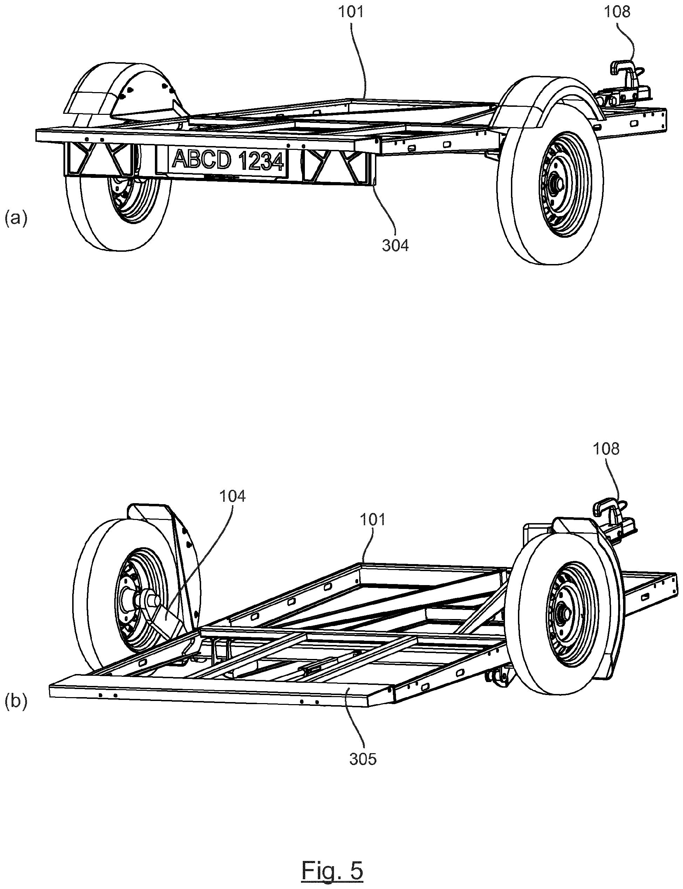

Enfin, les figures 5(a) et 5(b) présentent des vues arrière d'une remorque respectivement en position haute et en position basse selon le premier mode de réalisation de l'invention. Ainsi, on distingue clairement l'avantage d'utiliser des moyens d'escamotage d'une plaque minéralogique. En effet, sans ces moyens, il ne serait pas pratique de procéder aux chargements d'objets lourds et encombrants car il faudrait soulever ceux-ci. La présente remorque permet de pallier ce problème.

Enfin, dans un mode de réalisation particulier de l'invention, les moyens de guidage 301 permettent d'assurer une liaison glissière, et de tels moyens peuvent consister en des rails, ou des éléments roulants comme des galets, des patins, ou des douilles à billes.

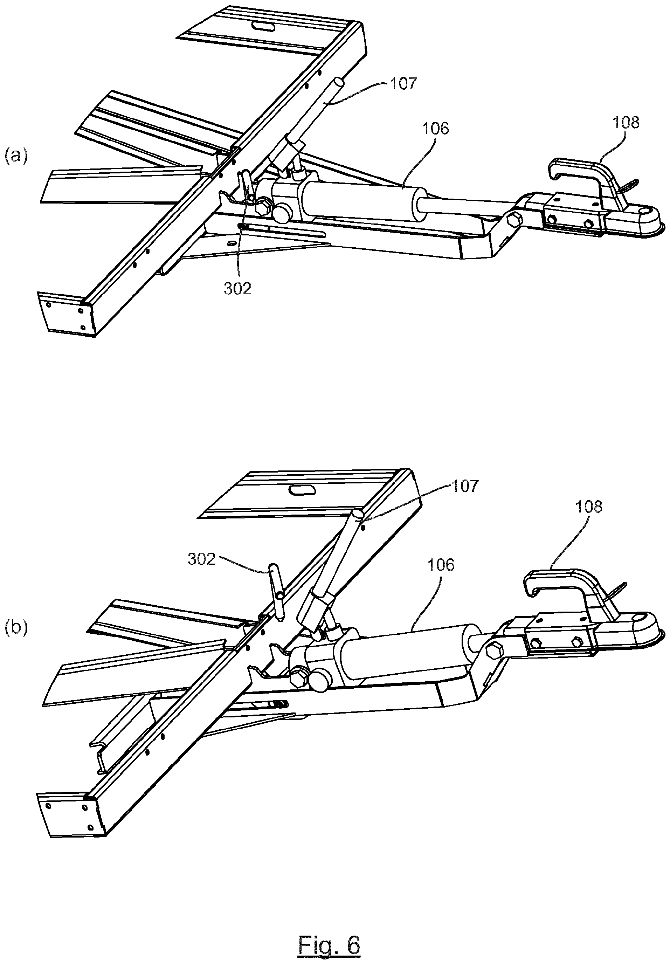

Les figures 6(a) et 6(b) présentent des vues en perspective d'une partie supérieure d'une remorque selon le premier mode de réalisation de l'invention respectivement en position route et en position dite de chargement. Ces vues permettent de mettre en exergue les moyens d'actionnement selon le premier mode de réalisation, ainsi que les moyens de guidage et les moyens de verrouillage.

On note que les moyens d'actionnement, comprenant le vérin 106 notamment, sont montés sur le châssis 101 d'une part, et sur l'extrémité du timon 105 d'autre part, à proximité de la flèche d'attelage 108.

Par ailleurs, le vérin 106 est disposé au-dessus du timon 105, ce qui facilite l'accès au vérin et le protège, en outre, des projections de la route.

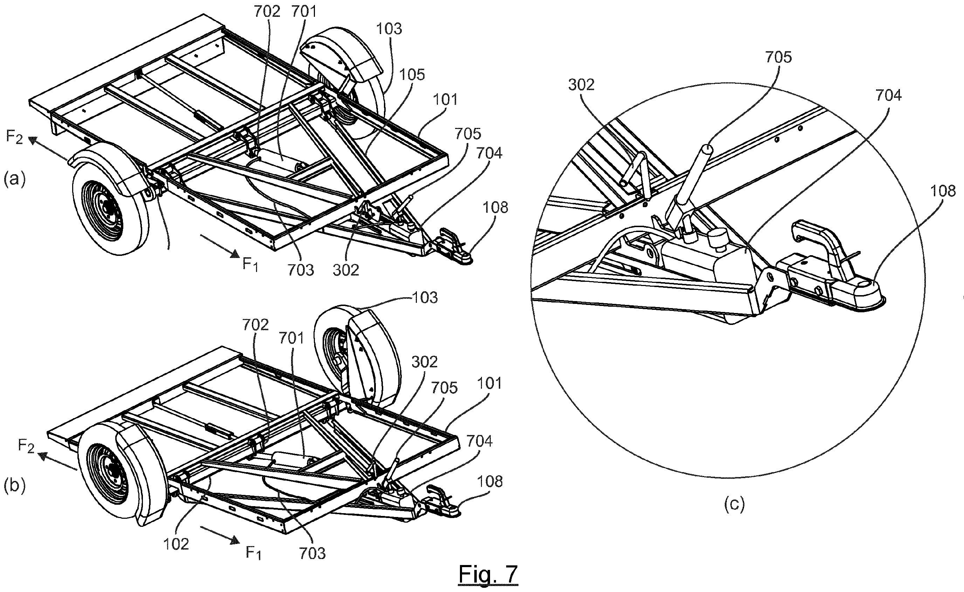

Les figures 7(a) et 7(b) présentent des vues de ¾ d'une remorque selon un deuxième mode de réalisation de l'invention respectivement en position route et en position dite de chargement.

Ainsi, dans ce mode de réalisation, seuls les moyens d'actionnement du coulissement du timon articulé sont différents par rapport au premier mode de réalisation de l'invention. En effet, dans ce mode de réalisation, un vérin 701 est monté sur l'essieu 102 via une articulation 702 correspondant à une pièce d'articulation 202, ainsi que sur le timon 105. Un tel vérin 701 est relié via un tuyau (flexible) 703 à une pompe 704 montée à proximité de la flèche d'attelage 108, ladite pompe étant actionnée par un levier 705 positionné lui-aussi à proximité de la flèche d'attelage 108. Les autres moyens sont quant à eux similaires à ceux présentés en lien avec les figures 2 à 6.

Dans ce mode de réalisation, lorsqu'un utilisateur souhaite charger des objets sur un plateau (non représenté) monté sur le châssis de la remorque, il actionne les moyens d'actionnement de sorte que le vérin 701 s'allonge. Le vérin 701 entraîne alors un coulissement du timon articulé 105 dans le sens de la flèche *F₂*, qui lui-même, étant fixé sur l'essieu 102 entraîne une pivotement selon un arc de cercle des bras 104, et de facto abaisse l'essieu 102 et donc le châssis 101 monté sur ledit essieu. Ainsi, l'utilisateur peut charger aisément des objets encombrants car la pente d'inclinaison du châssis par rapport au sol est faible (de l'ordre de quelques degrés).

La figure 7(c) présente une vue agrandie de l'extrémité de la remorque, à proximité de la flèche d'attelage. Ainsi, on distingue clairement le positionnement de la pompe 704 montée à proximité de la flèche d'attelage 108.

Une fois les objets chargés, l'utilisateur peut actionner le levier de commande 705 afin que le vérin 701 se comprime.

La compression du vérin 701 exerce alors une force selon la flèche *F₁* qui entraîne le timon articulé 105, dans cette direction. Ainsi, les bras mécaniques 104 pivotent alors dans le sens opposé à celui correspondant au basculement du châssis. Un tel pivotement à pour effet de redresser l'essieu, et donc le châssis monté sur celui-ci, jusqu'à ce que le châssis ainsi que le timon articulé soit à nouveau sensiblement parallèle au sol.

## Revendications

1. Remorque (100) basculante comprenant un châssis (101) monté sur un essieu (102) pivotant par rapport à des roues (103) de ladite remorque (100), ladite remorque (100) comprenant :
- un timon articulé (105) monté sur ledit essieu (102), ledit timon articulé étant monté libre et coulissant par rapport audit châssis (101) ;
- des moyens d'actionnement (106, 107) du coulissement dudit timon articulé (105),
ladite remorque (100) étant **caractérisée en ce que** ledit timon articulé (105) possède une forme en V, une première extrémité étant fixé à une flèche d'attelage (108), une deuxième extrémité étant fixée audit essieu (102) à proximité d'une première roue (103), et une troisième extrémité étant fixée audit essieu (102) à proximité d'une deuxième roue (103).

2. Remorque (100) selon la revendication 1, **caractérisée en ce que** lesdits moyens d'actionnement comprennent un levier de commande (107) et un vérin (106) appartenant à la liste comprenant :
- un vérin hydraulique ;
- un vérin pneumatique ;
- un vérin électrique ;
- un vérin mécanique.

3. Remorque (100) selon la revendication 1 ou 2, **caractérisée en ce que** lesdits moyens d'actionnement sont montés à proximité d'une flèche d'attelage (108) montée sur ledit timon articulé (105).

4. Remorque (100) selon la revendication 2 ou 3, **caractérisée en ce que** lesdits moyens d'actionnement sont solidaires dudit châssis (101) et dudit timon articulé (105).

5. Remorque (100) selon l'une des revendications 1 à 4, **caractérisée en ce qu'**elle comprend des moyens de guidage (301) dudit timon articulé (105) permettant de guider un mouvement dudit timon articulé (105) lors d'un coulissement dudit timon articulé (105) par rapport audit châssis (101).

6. Remorque (100) selon la revendication 5, **caractérisée en ce que** lesdits moyens de guidage (301) comprennent des rails, ou des éléments roulants.

7. Remorque (100) selon l'une des revendications 1 à 6, **caractérisée en ce qu'**elle comprend des moyens de verrouillage (302, 303) d'une position dudit timon articulé (105).

8. Remorque (100) selon la revendication 7, **caractérisée en ce que** lesdits moyens de verrouillage comprennent une goupille (302) ou un rivet.

9. Remorque (100) selon l'une des revendications 1 à 8, **caractérisée en ce qu'**elle comprend une plaque minéralogique (304) fixée audit châssis (101), et des moyens d'escamotage (305, 306, 307) de ladite plaque minéralogique (304) permettant d'escamoter ladite plaque (304) lors du basculement dudit châssis (101).

10. Remorque (100) selon la revendication 9, **caractérisée** en ce lesdits moyens d'escamotage (305, 306, 307) sont activés automatiquement lors de l'activation des moyens d'actionnement (106, 107).

11. Remorque (100) selon l'une des revendications 1, 2 et 5 à 10, **caractérisée en ce qu'**une première partie desdits moyens d'actionnement est montée sur ledit timon articulé (105), et qu'une deuxième partie desdits moyens d'actionnement est montée sur ledit essieu (102).

12. Remorque (100) selon la revendication 11, **caractérisée en ce que** ladite première partie (704, 705) desdits moyens d'actionnement comprend une pompe, et **en ce que** ladite deuxième partie (701) desdits moyens d'actionnement comprend un vérin relié (703) à ladite pompe.

13. Remorque (100) selon l'une des revendications 1 à 12, **caractérisée en ce qu'**elle comprend des moyens de suspension situés à l'intérieur dudit essieu (102).

## Patentansprüche

1. Kippanhänger (100), umfassend ein Fahrgestell (101), das auf einer Achse (102) montiert ist, die in Bezug auf die Räder (103) des Anhängers (100) schwenkbar ist, wobei der Anhänger (100) umfasst:
- eine angelenkte Deichsel (105), die an der Achse (102) montiert ist, wobei die angelenkte Deichsel frei und gleitend in Bezug auf das Fahrgestell (101) montiert ist;
- Gleitbetätigungsmittel (106, 107) der angelenkten Deichsel (105):
wobei der Anhänger (100) **dadurch gekennzeichnet ist, dass** die angelenkte Deichsel (105) eine V-Form aufweist, wobei ein erstes Ende an einem Kupplungsausleger (108) befestigt ist, wobei ein zweites Ende an der Achse (102) in der Nähe eines ersten Rads (103) befestigt ist, und wobei ein drittes Ende an der Achse (102) in der Nähe eines zweiten Rads (103) befestigt ist.

2. Anhänger (100) nach Anspruch 1, **dadurch gekennzeichnet, dass** die Betätigungsmittel einen Steuerhebel (107) und einen Zylinder (106) umfassen, der zur Liste gehört umfassend:
- einen hydraulischen Zylinder;
- einen pneumatischen Zylinder;
- einen elektrischen Zylinder;
- einen mechanischen Zylinder.

3. Anhänger (100) nach Anspruch 1 oder 2, **dadurch gekennzeichnet, dass** die Betätigungsmittel in der Nähe eines Kupplungsauslegers (108) montiert sind, der an der angelenkten Deichsel (105) montiert ist.

4. Anhänger (100) nach Anspruch 2 oder 3, **dadurch gekennzeichnet, dass** die Betätigungsmittel mit dem Fahrgestell (101) und mit der angelenkten Deichsel (105) fest verbunden sind.

5. Anhänger (100) nach einem der Ansprüche 1 bis 4, **dadurch gekennzeichnet, dass** dieser Führungsmittel (301) der angelenkten Deichsel (105) umfasst, die es gestatten, eine Bewegung der angelenkten Deichsel (105) beim Gleiten der angelenkten Deichsel (105) in Bezug auf das Fahrgestell (101) zu führen.

6. Anhänger (100) nach Anspruch 5, **dadurch gekennzeichnet, dass** die Führungsmittel (301) Schienen oder rollende Elemente umfassen.

7. Anhänger (100) nach einem der Ansprüche 1 bis 6, **dadurch gekennzeichnet, dass** dieser Verriegelungsmittel (302, 303) einer Position der angelenkten Deichsel (105) umfasst.

8. Anhänger (100) nach Anspruch 7, **dadurch gekennzeichnet, dass** die Verriegelungsmittel einen Stift (302) oder einen Niet umfassen.

9. Anhänger (100) nach einem der Ansprüche 1 bis 8, **dadurch gekennzeichnet, dass** dieser umfasst: ein Nummernschild (304), das an dem Fahrgestell (101) befestigt ist, und Einklappmittel (305, 306, 307) des Nummernschilds (304), die es gestatten, das Schild (304) beim Kippen des Fahrgestells (101) einzuklappen.

10. Anhänger (100) nach Anspruch 9, **dadurch gekennzeichnet, dass** die Einklappmittel (305, 306, 307) automatisch bei der Aktivierung der Betätigungsmittel (106, 107) aktiviert werden.

11. Anhänger (100) nach einem der Ansprüche 1, 2 und 5 bis 10, **dadurch gekennzeichnet, dass** ein erster Teil der Betätigungsmittel an der angelenkten Deichsel (105) montiert ist, und dass ein zweiter Teil der Betätigungsmittel an der Achse (102) montiert ist.

12. Anhänger (100) nach Anspruch 11, **dadurch gekennzeichnet, dass** der erste Teil (704, 705) der Betätigungsmittel eine Pumpe umfasst, und dadurch, dass der zweite Teil (701) der Betätigungsmittel einen Zylinder (703) umfasst, der mit der Pumpe verbunden ist.

13. Anhänger (100) nach einem der Ansprüche 1 bis 12, **dadurch gekennzeichnet, dass** dieser Aufhängungsmittel umfasst, die im Inneren der Achse (102) angeordnet sind.

## Claims

1. Tilting trailer (100) comprising a chassis (101) mounted on an axle (102) that pivots with respect to wheels (103) of said trailer (100), said trailer (100) comprising:
- a articulated drawbar (105) mounted on said axle (102), said articulated drawbar being mounted so that it is free and sliding with respect to said chassis (101);
- actuating means (106, 107) of the sliding of said articulated drawbar (105),
said trailer (100) being **characterised in that** said articulated drawbar (105) is V-shaped, a first end being fixed to a hitch tongue (108), a second end being fixed to said axle (102) in the vicinity of a first wheel (103), and a third end being fixed to said axle (102) in the vicinity of a second wheel (103).

2. Trailer (100) according to claim 1, **characterised in that** said actuating means comprise a control lever (107) and a cylinder (106) belonging to the list including:
- a hydraulic cylinder;
- a pneumatic cylinder;
- an electric cylinder;
- a mechanical cylinder.

3. Trailer (100) according to claim 1 or 2, **characterised in that** said actuating means are mounted in the vicinity of a hitch tongue (108) mounted on said articulated drawbar (105).

4. Trailer (100) according to claim 2 or 3, **characterised in that** said actuating means are integral with said chassis (101) and with said articulated drawbar (105).

5. Trailer (100) according to one of claims 1 to 4, **characterised in that** it comprises means for guiding (301) said articulated drawbar (105) making it possible to guide a movement of said articulated drawbar (105) during a sliding of said articulated drawbar (105) with respect to said chassis (101).

6. Trailer (100) according to claim 5, **characterised in that** said means for guiding (301) comprise rails, or rolling elements.

7. Trailer (100) according to one of claims 1 to 6, **characterised in that** it comprises means for locking (302, 303) a position of said articulated drawbar (105).

8. Trailer (100) according to claim 7, **characterised in that** said means for locking include a pin (302) or a rivet.

9. Trailer (100) according to one of claims 1 to 8, **characterised in that** it comprises a number plate (304) fixed to said chassis (101), and means for retracting (305, 306, 307) said number plate (304) making it possible to retract said plate (304) during the tilting of said chassis (101).

10. Trailer (100) according to claim 9, **characterised in that** said means for retracting (305, 306, 307) are automatically activated during the activation of the actuating means (106, 107).

11. Trailer (100) according to one of claims 1, 2 and 5 to 10, **characterised in that** a first portion of said actuating means is mounted on said articulated drawbar (105), and that a second portion of said actuating means is mounted on said axle (102).

12. Trailer (100) according to claim 11, **characterised in that** said first portion (704, 705) of said actuating means comprises a pump, and **in that** said second portion (701) of said actuating means comprises a cylinder connected (703) to said pump.

13. Trailer (100) according to one of claims 1 to 12, **characterised in that** it comprises means of suspension located inside said axle (102).
